# EUROPEAN PATENT SPECIFICATION

(11) **EP 1 966 752 B1**
(45) Date of publication and mention of the grant of the patent: **29.02.2012**
(21) Application number: 06842528.9
(22) Date of filing: 14.12.2006
(51) Int. Cl.: B65D 73/00, B65D 65/00, B65D 81/36, B65D 5/42, B65D 71/00

(54) **STACKED PRODUCT ARRAY WITH ENHANCED VISIBILITY AND RECOGNITION**
STAPELPRODUKTARRAY MIT ERHÖHTER SICHTBARKEIT UND ERKENNUNG
ENSEMBLE DE PRODUITS EMPILES A VISIBILITE ET RECONNAISSANCE AMELIOREES

(30) Priority: 27.12.2005 US 754064 P; 27.12.2005 US 754144 P; 19.09.2006 US 845569 P
(43) Date of publication of application: 10.09.2008
(73) Proprietor: The Procter & Gamble Company, Cincinnati, OH 45202 (US)
(72) Inventor: PICZON, Rhinn Paul Lucero, Quezon, 1109 (PH)
(74) Representative: Mather, Peter Geoffrey
(86) International application number: PCT/IB2006/054857
(87) International publication number: WO 2007/074412

(56) References cited:
- GB-A- 2 037 695
- US-A- 3 522 688
- US-A- 5 430 992
- US-A1- 2003 234 199

## Description

### FIELD OF THE INVENTION

The present invention relates to packages. Specifically, the present invention relates to packages containing artwork.

### BACKGROUND OF THE INVENTION

Products such as laundry detergents, cereals, tissues, etc. are often sold as individual products which are often stacked together in the store, during shipment, etc. Such products are often contained in boxes. Typically, each box then contains an identical graphic (i.e., artwork) thereupon which identifies the product, provides information to the consumer, and may also provide aesthetic benefits. However, in many stores, especially in, for example, warehouse stores, supermarkets, and/or club stores such as Wal-Mart, Carrefour, Target, Kroger, Aldi, Tesco, Sam's Club, Costco, etc., many thousands of products are displayed simultaneously, leading to low visibility for individual products. Similarly, with the growing incidence of some stores marketing and displaying their own products in colors and packages which are increasingly similar to those of consumer products companies' products, it is becoming increasingly difficult and time consuming for consumers to easily see, recognize and find the products they desire.

Various methods for increasing visibility and recognition of products are known such as using specially-designed display cases, separate signs hung above or from the products, shelf-stickers, televisions, etc. However, such methods require additional materials other than the product themselves. Such methods may also take up additional floor space and/or store volume which is essentially "dead-space" which can not be used to store or display actual products for sale, and thereby decreases floor utilization efficiency.

Accordingly, the need exists for a method and apparatus for enhancing the visibility and recognition of a stacked product array in a store, and especially a warehouse store, a supermarket or a club store.

US 5,430,992 relates to a method to form stacked article groups, having predetermined graphic arrangements.

### SUMMARY OF THE INVENTION

The present invention relates to a set of stacked product arrays having enhanced visibility and recognition comprising a first stacked product array , and a second stacked product array stacked immediately deeper, wherein the stacked product arrays (100) each comprise a plurality of individual products (110), each individual product comprising a visible graphic (112), wherein when the individual products are aligned together at least one edge (113a) of each visible graphic (112a) matches at least one edge (113b) of at least one other visible graphic, wherein at least one visible graphic (112a) is different from at least one other visible graphic (112b), wherein the individual products are stacked appropriately so that the combination of the visible graphics forms at least one continuous larger visible graphic (114) wherein the area of the continuous larger visible graphic is larger than the average area of the visible graphics, wherein einen product is removably stacked, wherein the first stacked product array comprises a first set of individual products (110) which form the continuous larger visible graphic (114), wherein the continuous larger visible graphic is a first continuous larger visible graphic, and wherein the second stacked product array comprises a second set of individual products (110) stacked immediately deeper than the first set of individual products, and wherein at least one individual product in the second set of individual products comprises the same visible graphic (112c) as a corresponding individual product from the first set of individual products, such that if the corresponding individual product is removed, the visible graphic from the individual product from the second set of individual products appears to form part of the first continuous larger visible graphic.

The present invention also relates to a process for enhancing the visibility and recognition of a set of stacked product arrays by providing a plurality of individual products, each of which contains a visible graphic which is different. At least one edge of each visible graphic matches at least one edge of at least one other visible graphic. The individual products are stacked together such that the combination of the visible graphics forms at least one continuous larger graphic whose area is larger than the average area of the visible graphics, wherein each product is removably stacked, wherein einen product is removably stacked, wherein the first stacked product array comprises a first set of individual products (110) which form the continuous larger visible graphic (114), wherein the continuous larger visible graphic is a first continuous larger visible graphic, and wherein the second stacked product array comprises a second set of individual products (110) stacked immediately deeper than the first set of individual products, and wherein at least one individual product in the second set of individual products comprises the same visible graphic (112c) as a corresponding individual product from the first set of individual products, such that if the corresponding individual product is removed, the visible graphic from the individual product from the second set of individual products appears to form part of the first continuous larger visible graphic.

It has now been found that since the area of the continuous larger visible graphic is significantly larger than the average area of the visible graphics, the visibility and recognition of the array of products is significantly increased. Such an improved stacked product array also helps a consumer recognize the product from farther away and also to more quickly "cut through the visual clutter" in the store, in order to find a desired product in a crowded warehouse store, supermarket, or club store.

### BRIEF DESCRIPTION OF THE DRAWINGS

While the specification concludes with claims particularly pointing out and distinctly claiming the invention, it is believed that the invention will be better understood from the following description of the accompanying figures in which like reference numerals identify like elements, and wherein:
Fig. 1 is a stacked product array of individual products according to the present invention stacked appropriately;
Fig. 2 is a stacked product array of individual products according to the present invention stacked appropriately, with an individual product removed, and seen from point A in Fig. 1;
Fig. 3 is a comparative drawing of a typical shelf in a store;
Fig. 4 is a drawing of a shelf in a store with a plurality of stacked product arrays of individual products according to the present invention stacked appropriately; and
Fig. 5 is a stacked product array of individual products according to the present invention stacked appropriately.

The figures herein are not necessarily drawn to scale.

### DETAILED DESCRIPTION OF THE INVENTION

As used herein, the term "comprising" means that other steps, ingredients, elements, etc. which do not adversely affect the end result can be added. This term encompasses the terms "consisting of' and "consisting essentially of".

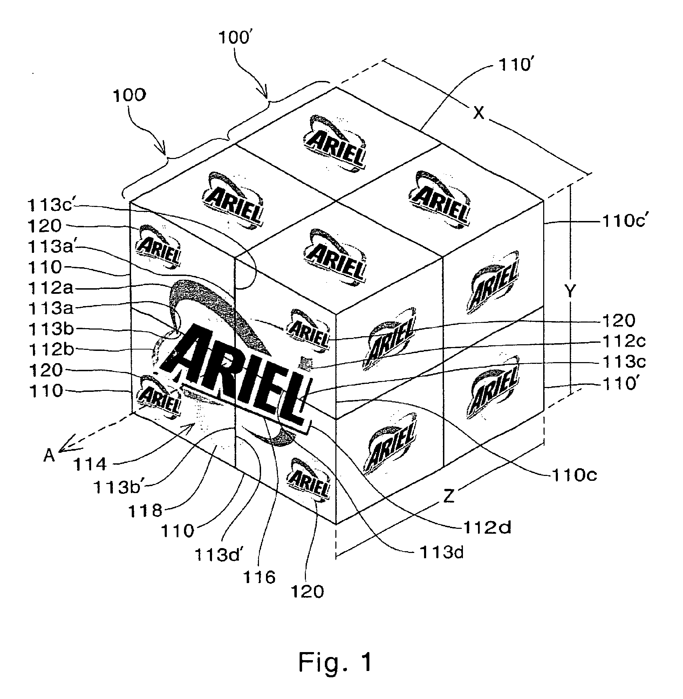

As used herein with respect to any specific stacked product array, the terms "deep" and "deeper'' indicates farther away from a viewer (see point A in Fig. 1) who is facing the continuous larger visible graphic. i.e., as per the Z dimension in Fig. 1.

As used herein, the term "matches" and various forms thereof such as "matching" mean that when an edge of a visible graphic is correctly aligned with the corresponding edge of another visible graphic, the patterns, colors, lines, and/or visual elements of each of the visible graphics together form what appears to be a continuous image. See, for example, the discussion relating to edges 113a' and 113c' in Fig. 1.

As used herein, the terms "stack appropriately" and "stacked appropriately" indicates that the individual products with their visible graphics are aligned and stacked, at least initially, in a manner consistent with forming, and so as to form, the desired continuous larger visible graphic.

As used herein, with respect to any specific stacked product array, the term "tall" indicates up-and-down from the point of view of a viewer (see point A in Fig. 1) who is facing the continuous larger visible graphic. i.e., as per the Y dimension in Fig. 1.

As used herein with respect to any specific stacked product array, the term "wide" indicates from left-to-right from the point of view of a viewer (see point A in Fig. 1) who is facing the continuous larger visible graphic. i.e., as per the X dimension in Fig. 1.

Stacked product arrays are common in large stores, especially at the ends of rows, or in the aisles and open areas where they are intended to draw attention. Such displays are also often used for special promotions or sales. However, with the growth in floor space of the larger stores combined with the proliferation of such stacked products, it can be increasingly difficult to rapidly recognize and identify specific desired products. Previously, problems such as a lack of visibility was addressed by preparing special advertising materials and in-store materials such as hanging flags, special display cases, and even placing television screens to attract and hold the attention of customers. However, such methods may be expensive and add extra expense over and beyond the price of the individual products themselves. Such use of additional in-store materials can also reduce the profitability of each square meter of floor space as costs tend to increase, and as floor space is taken up with non-saleable goods. Thus, dead-space is decreased, and existing floor space may be used more efficiently and profitably.

The present invention provides a way of using the actual individual products to be sold as a larger advertising medium by forming a continuous larger visible graphic, and thereby reducing or eliminating the need for additional in-store promotion materials. Especially in a typical large warehouse store, such a continuous larger visible graphic may be more easily seen from a distance whereas multiple smaller graphics would be lost in the visual clutter of the store.

Accordingly, the present invention provides a stacked product array having enhanced visibility and recognition which contains a plurality of individual products, each individual product comprising a visible graphic. When the individual products are aligned together at least one edge of each visible graphic matches at least one edge of at least one other visible graphic. In contrast to typical in-market products, each visible graphic is different, so that when the individual products are stacked appropriately the combination of the visible graphics forms at least one continuous larger visible graphic. In order to be effective, the area of the continuous larger visible graphic is larger than the average area of the visible graphics.

Turning to the figures, Fig. 1 shows a stacked product array, 100, of individual products stacked appropriately. The stacked product array, 100, contains a plurality of individual products, 110. The contents of the individual product may be selected from, for example, a laundry or other type of detergent, a cosmetic, a gift pack, an electric or manual appliance, a razor, a hair product, a skin product, a feminine protection product, a diaper, an adult incontinence product, a consumable product such as food, etc. Each individual product, 110, is removably stacked within the stacked product array, 100, such that it can be repeatedly removed and replaced with the same individual product, or another. The individual products, 110, are aligned in a first stacked product array, 100, which is two individual products wide and two individual products tall. In the first stacked product array, 100, each individual product has a visible graphic, 112a, 112b, 112c, and 112d, which is different from each other visible graphic.

In Fig. 1, each visible graphic, 112, has two edges, 113, which match the edges, 113 of two other visible graphics, 112. Specifically, the edge, 113a, of visible graphic, 112a, matches the edge, 113b, of visible graphic, 112b. The edge, 113a', of visible graphic, 112a, matches the edge, 113c', of visible graphic 112c. The edge, 113d', of visible graphic, 112d, also matches the edge, 113b', of visible graphic, 112b. The edge, 113d, of visible graphic 112d also matches the edge, 113c, of visible graphic 112c. In an embodiment herein, each visible graphic has at least one edge which matches an edge of at least one other visible graphic. In an embodiment herein, each visible graphic has at least two edges which match at least two edges from two other visible graphics. In an embodiment herein, each visible graphic has from about 2 to about 4 edges which match edges from the same number of other visible graphics. The visible graphics herein may be attached to the individual products by any manner known in the art, such as printing, etching, laminating, gluing/adhesives, silk-screening, etc. In an embodiment herein, the visible graphic is embedded into the individual product during the production process, and/or is formed as part of the individual product's package, for example, with a bottle or in a blow-molding process.

In Fig. 1, the visible graphics, 112a, 112b, 112c, 112d, match to form a continuous larger visible graphic, 114, whose area is approximately 4 times larger than the average area of the visible graphics. In Fig. 1, each visible graphic, 112, is represented by a part of the Ariel logo, 116, including a corresponding part of the "Atomium", 118. Thus, each visible graphic, 112, possesses roughly the same area and is about the same shape; i.e., about one quarter of the continuous larger visible graphic, 114, represented by the large Ariel logo, 116, and the large "Atomium", 118. However, it is recognized that depending on the actual embodiment, the size and shape of each visible graphic may vary widely. It is recognized herein that the continuous larger visible graphic may be solely a picture, a trademark, a logo, etc. which promotes recognition of the individual product, or in many cases the continuous larger visible graphic may contain therein a picture, a trademark, a logo, etc. which promotes recognition of the individual product.

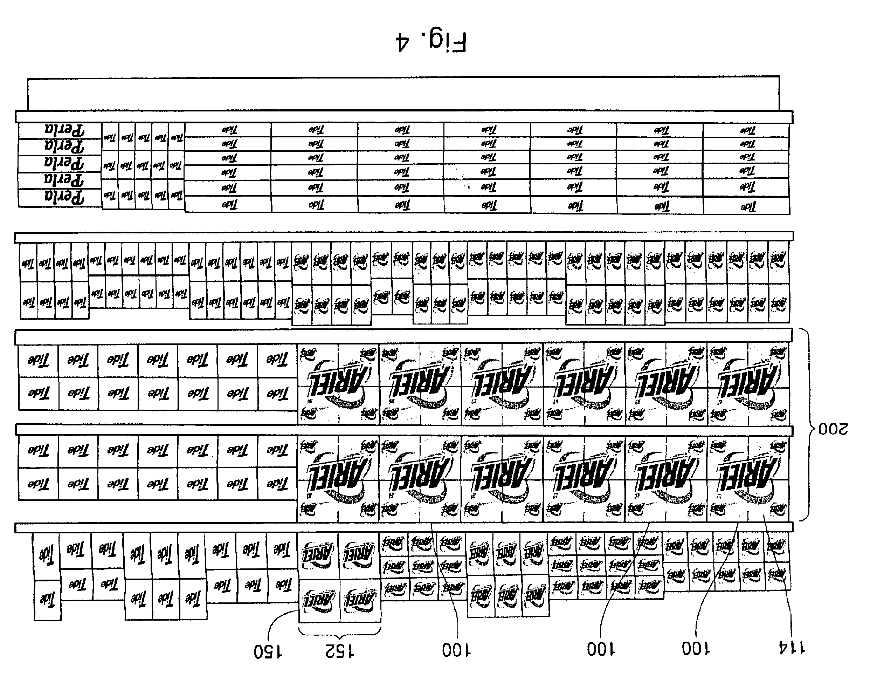

The continuous larger visible graphic of Fig. 1 is a non-repetitive continuous larger visible graphic, which means that the same continuous larger visible graphic is not repeated within the same array. i.e., there is only one large Ariel logo and Atomium graphic in the stacked product array. Such non-repetitive continuous larger visible graphics are believed to be more easily visible and recognizable from a distance than larger continuous visible graphics which repeat within the same array. However, it is recognized that different arrays may be placed together (see Fig. 4, at 200), but this would not include the case where individual boxes, each containing exactly the same graphics are stacked on top of each other (see Fig. 4 at 150). In Fig. 1, the individual products are in the form of boxes, however other product forms and shapes are also useful herein. The individual products in the Figures contain rectangular or square cross-sections, but other shaped cross-sections are also specifically contemplated and included herein, such as triangular, pentagonal, hexagonal, round, etc., as desired. Boxes may be made with materials known in the packaging art such as paper, cardboard, plastics, resins, laminates, films, metal, wood, glass, etc., and by processes known in the packaging art. In an embodiment herein the shape of each individual product is substantially identical, as such shapes may be easier to stack appropriately to form the continuous larger visible graphic, may be more stable upon stacking, and/or may fit together better, either structurally, or so as to form the continuous larger visible graphic. In an embodiment herein the dimensions of each individual product are substantially identical, as such shapes may be easier to stack appropriately to form the continuous larger visible graphic, may be more stable upon stacking, and/or may fit together better. In an embodiment herein, the individual products are in the form of boxes which are easy to stack appropriately and which are relatively stable once stacked. Such boxes may be cubes, or boxes with two or more rectangular sides, as preferred. In an embodiment herein the boxes are cubes. In an embodiment herein the boxes have four rectangular sides and two square sides. In another embodiment herein at least one individual product has a different shape from at least one other individual product.

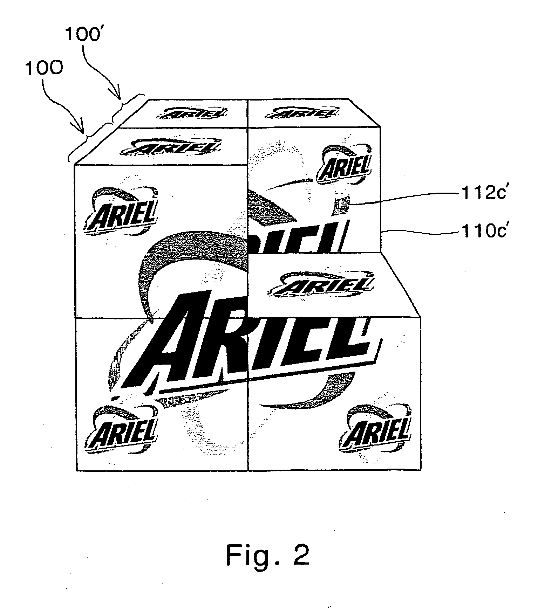

Behind and immediately deeper than the first stacked product array in Fig. 1 is a second stacked product array, 100', also formed of a plurality of individual products, 110', stacked two individual products wide, and two individual products tall. The second continuous larger visible graphic of the second stacked product array, 100' is not visible in Fig. 1, as it is hidden by the first stacked product array, 100. The set of stacked product arrays contains a first stacked product array and a second stacked product array stacked immediately deeper than the first stacked product array, as shown in Fig. 1. Such a first stacked product array contains a first set of individual products which form the continuous larger visible graphic which is designated as a first continuous larger visible graphic. The second stacked product array contains a second set of individual products, often identical to those of the first stacked product array. As shown in Fig. 1, the second stacked product array is stacked immediately deeper than the first stacked product array, such that the second set of individual products are stacked immediately deeper than the first set of individual products. At least one, preferably all, of the second set of individual products contains the same visible graphic as a corresponding individual product from the first set of individual products. As used herein, a "corresponding individual product" in a first set of individual products indicates that when a viewer is facing and looking at the continuous larger visible graphic, the corresponding individual product is closer to the viewer and blocking the view of the individual product in the second set of individual products. For example, in Fig. 1, when seen from the eye at point A, the individual product 110c would have the same visible graphic as individual product 110c', even though it is currently blocked by individual product 110c. Thus, when individual product 110c is removed from the stacked product array, 100, the visible graphic from the individual product, 110c', from the second set of individual products (in the second stacked product array) can appear to form a part of the first continuous larger visual graphic, as seen in Fig. 2. Such a set of stacked product arrays allows the continuous larger visible graphic to be seen, even when some individual products in the first stacked product array are removed or missing. Embodiments containing more than two stacked product arrays are included herein. In an embodiment herein, the set of stacked product arrays contains two stacked product arrays. In an embodiment herein, the set of stacked product arrays contains from about 3 to about 9, or from about 4 to about 6 stacked product arrays.

While not shown in the Figures herein, it is contemplated that even with only 8 boxes as in Fig. 1, four distinct continuous larger visible graphics could be shown, one on each facet of the cube formed by the 8 boxes when they are stacked together. Furthermore, each continuous larger visible graphic could be either the same, or different from each other continuous larger visible graphic.

In the embodiment of Fig. 1, each individual product, 110, further contains a separate visible graphic, 120, which is identical on each individual product, 110, although the actual positioning of the separate visible graphic, 120, on each individual product, 110, varies. Such a separate visible graphic is not intended to interact with other separate visible graphics or visible graphics on other individual packages, but is intended to further enhance the recognition of the individual product when it is viewed outside of the context of the stacked product array, for example, when brought home for actual use. In an embodiment herein, the separate visible graphic is a smaller version of the continuous larger visible graphic.

Fig. 2 is a stacked product array of individual products, 100, according to the present invention stacked appropriately and seen from point A in Fig. 1. An individual product (see 110c in Fig. 1) is removed. Fig. 2 shows that the visible graphic, 112c', on the individual product, 110c', which is immediately deeper than previous individual product 110c, is the same as the visible graphic, 112c, on the previous individual product, 110c, with the same edges, matching, etc. In fact, in this embodiment, the individual products 110c and 110c' are identical, except for their physical locations.

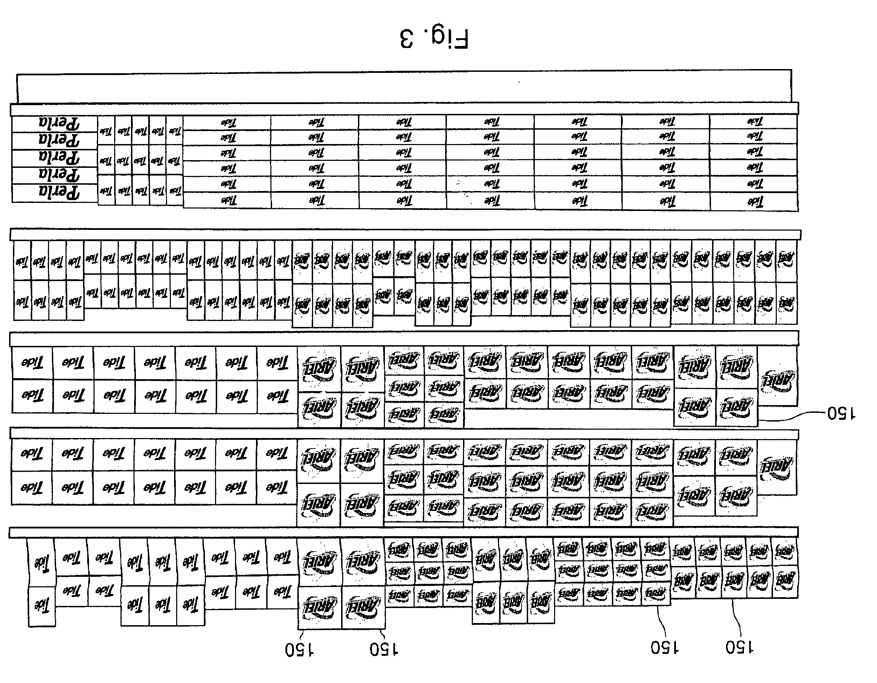

Fig. 3 shows a comparative drawing of a typical shelf in a store. The view is confusing and visually cluttered. Individual boxes, 150, with exactly the same graphics (or nearly the same graphics if different variants are located close to each other) are stacked on top of each other and/or next to each other on the shelves. This is the way current products are typically displayed in stores around the world.

Fig. 4 shows a drawing of a shelf in a store with a plurality of stacked product arrays, 100, of individual products according to the present invention stacked appropriately. As can be seen in comparison to Fig. 3, the stacked product array and continuous larger visible graphic of the present invention significantly enhance visibility and recognition of the individual products from a distance. Compare, for example, the visibility and recognition of individual boxes, 150, or even the combination, 152, of four such individual boxes, 150, as compared to the continuous larger visible graphic, 114, and the stacked product array, 100. Such comparisons are equally, if not more powerful when considered in a warehouse store.

In Fig. 4, multiple stacked product arrays, 100, are placed next to each other and/or on top of each other as seen at 200. It is expected that multiple stacked product arrays will typically be stacked together as seen at 200.

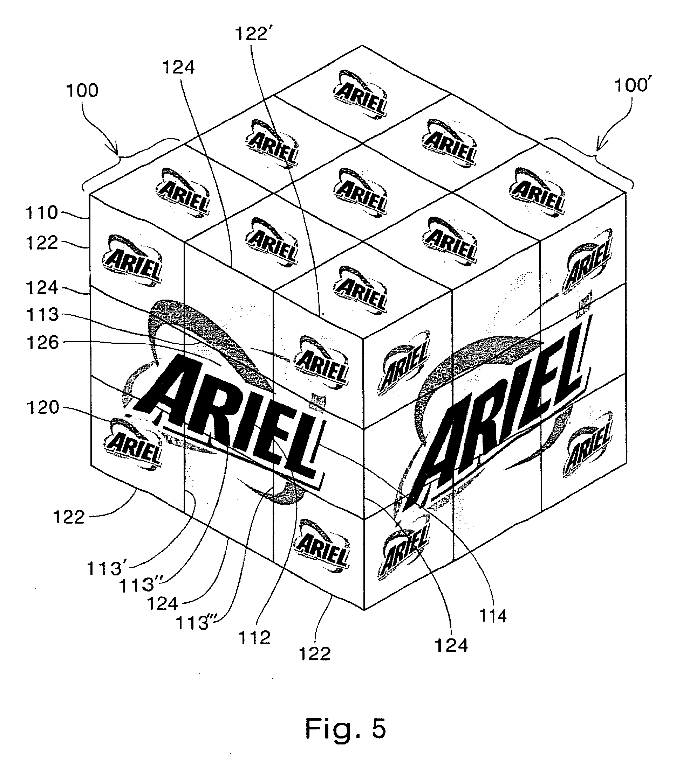

Fig. 5 shows a stacked product array, 100, of individual products, 110, according to the present invention stacked appropriately. The stacked product array is three individual products wide, and three individual products tall. In this stacked product array, 100, the four corner individual products, 122, each have a visible graphic, 112, which has two edges, 113 which match the visible graphic, 112, of the two adjoining individual products, the same as in Fig. 1. However, as each side individual product, 124, touches three other individual products (i.e., two corner individual products, 122, and a center individual product, 126), the side individual product actually has a visible graphic, 112, with three edges, 113', 113", and 113'" which match with the corresponding edges of the adjacent visible graphics, 112, and individual products, 110. Furthermore, the center individual product, 126, has a visible graphic, 112, with four edges, 113, which match with the corresponding edges of the adjacent visible graphics, 112, and individual products, 110. In this case, the continuous larger graphic, 114, has an area which is about 9 times the size of the average area of the visible graphics.

The stacked product array is typically at least two individual products wide and at least two individual products tall. Without intending to be limited by theory, it has been found that increasing both the height and width can significantly enhance visibility and recognition of a product in a store-like environment, as compared to merely increasing height or width, alone. This is true even if the total area of the continuous larger visible graphic is the same. i.e., a 2 x 2 stack is more visible and recognizable than a 4 x 1 row or a 1 x 4 column. In an embodiment herein, the stacked product array is from about 2 to about 9, or from about 3 to about 5 individual products wide In an embodiment herein, the stacked product array is from about 2 to about 9, or from about 3 to about 5 individual products tall. In another embodiment herein, the stacked product array contains from about 4 to about 81, or from about 6 to about 45, or from about 9 to about 25 individual products. In an embodiment herein, the area of the continuous larger visible graphic is from about 4 times to about 81 times, or from about 6 to about 45 times, or from about 9 to about 25 times larger than the average area of the visible graphics.

In the embodiment of Fig. 5, it can be seen that while the corner individual products possess separate visible graphics, 120, the side individual products, 124 and the center individual product, 126, do not contain separate visible graphics, 120. Furthermore, a second stacked product array, 100', according to the present invention is also present which employs corner individual product, 122', in both the first stacked product array, 100, as well as the second stacked product array, 100'.

Such a stacked product array may be stacked appropriately by hand, by a machine during the production process, etc. In an embodiment herein, the stacked product array is stacked appropriately in a shipping container, such as a cardboard box or a shrink-wrapped film, which is appropriately sealed and shipped to the store. The shipping container serves multiple purposes, such as protection of the individual products during shipping and handling, assuring that the stacked product array stays stacked appropriately, etc. Upon arrival in the store, a store employee or other individual removes at least a portion of the shipping container (i.e., by removing one or more side panels of the cardboard box or cutting away the shrink-wrap) to reveal the continuous larger visible graphic. Such an embodiment is especially advantageous as it significantly reduces work in the store to set up the stacked product array, and also provides a stacked product array which serves a double purpose as a display counter. The shipping container may also contain a separate visible graphic thereupon. In an embodiment herein, a stacked product array is further stacked on top of at least one other stacked product array so as to more efficiently use the floor space and also increase the visibility of the stacked product arrays from a distance. While the embodiments in the Figures all show rectangular or square stacked product arrays, other shapes and configurations are also specifically encompassed herein, such as, for example, pyramids, globes, circles, triangles, etc. Furthermore, it is recognized that the continuous larger visible graphic herein need not be in the same vertical or horizontal plane, and thus such a continuous larger visible graphic is specifically encompassed herein.

In an embodiment herein, the individual products are packages which contain multiple items therein each of which is further intended for individual sale.

### EXAMPLE 1

A first stacked product array according to Fig. 1 is formed by providing 4 individual products in the form of boxes. Each box is of substantially identical dimensions, are rectangular on 4 sides and square on 2 sides, and hold about 1 kg of granular laundry detergent. Each individual product contains a visible graphic containing two edges which match with the corresponding edges of two separate other individual products as in Fig. 1. Each visible graphic on the 4 boxes is different, hut each box also contains a separate visible graphic of the Ariel logo and the Atomium.

A manufacturing line assures that the individual products are stacked appropriately such that the combination of the visible graphics forms a single continuous larger visible graphic of the Ariel logo and the Atomium. The area of the continuous larger visible graphic is about 4 times lager than the average area of the visible graphics. A second stacked product array is then provided and stacked immediately deeper to the first stacked product array, and a third stacked product array is provided and stacked immediately deeper to the second stacked product array. The manufacturing line then forms a cardboard box shipping container around the set of three stacked product arrays. The shipping container contains easy-tear perforations and tape around the base to allow someone to easily remove the side panels to display the continuous larger visible graphic without having to separately take each individual product out of the shipping container and re-stack them appropriately. The shipping container also contains an Ariel logo and Atomium on 4 sides thereof. The shipping container containing the three stacked product arrays is then shipped via standard transportation to a warehouse store for display and sale.

### EXAMPLE 2

A stacked product array according to Fig. 5 is provided by producing 27 individual products in boxes having substantially identical dimensions. Each box contains a visible graphic and is stacked appropriately by hand in the store to form a rough cube. All four horizontal sides of the cube each contain a continuous larger visible graphic, however each of these four continuous larger visible graphics is different.

### EXAMPLE 3

A stacked product array according to Fig. 5 is provided by producing 27 individual products in boxes having substantially identical dimensions. Each box also initially contains identical graphics, and are aligned and stacked by hand in the store to form a rough cube 3 individual products wide, 3 individual products tall and 3 individual products deep. A continuous larger visible graphic which is printed onto a poster-sized sheet of paper and which is substantially identical in size to one side of the cube is then prepared. The continuous larger visible graphic is then cut up into 9 visible graphics whose size and shape correspond to the side of the individual products. Each visible graphic is then affixed to the corresponding individual product so as to re-form the continuous larger visible graphic.

The citation of any document is not to be construed as an admission that it is prior art with respect to the present invention. To the extent that any meaning or definition of a term in this written document conflicts with any meaning or definition of the term in a document incorporated by reference, the meaning or definition assigned to the term in this written document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A set of stacked product arrays having enhanced visibility and recognition comprising a first stacked product array , and a second stacked product array stacked immediately deeper, wherein the stacked product arrays (100) each comprise a plurality of individual products (110), each individual product comprising a visible graphic (112), wherein when the individual products are aligned together at least one edge (113a) of each visible graphic (112a) matches at least one edge (113b) of at least one other visible graphic (112b), wherein at least one visible graphic (113a) is different from at least one other visible graphic (112b), wherein the individual products are stacked appropriately so that the combination of the visible graphics forms at least one continuous larger visible graphic (114) wherein the area of the continuous larger visible graphic is larger than the average area of the visible graphics, wherein einen product is removably stacked, wherein the first stacked product array comprises a first set of individual products (110) which form the continuous larger visible graphic (114), wherein the continuous larger visible graphic is a first continuous larger visible graphic, and wherein the second stacked product array comprises a second set of individual products (110) stacked immediately deeper than the first set of individual products, and wherein at least one individual product in the second set of individual products comprises the same visible graphic (112c) as a corresponding individual product from the first set of individual products, such that if the corresponding individual product is removed, the visible graphic from the individual product from the second set of individual products appears to form part of the first continuous larger visible graphic.

2. The set of stacked product arrays according according to Claim 1, wherein the products are in the form of boxes.

3. The set of stacked product arrays according to Claim 1, wherein the stacked product array is at least three individual products wide.

4. The set of stacked product arrays according to Claim 1, wherein the stacked product array is at least three individual products tall.

5. The set of stacked product arrays according to Claim 1, wherein the area of the continuous larger visible graphic is from about 4 times to about 81 times larger than the average area of the visible graphics.

6. The set of stacked product arrays according to Claim 1, wherein the continuous larger visible graphic is a non-repetitive continuous larger visible graphic.

7. The set of stacked product arrays according to Claim 1, further comprising a shipping container, wherein the stacked product array is stacked appropriately in the shipping container such that the continuous larger graphic is formed.

8. The set of stacked product arrays according to Claim 9, wherein the second stacked product array comprises a second continuous larger visible graphic (114) and wherein the first continuous larger visible graphic (114) is the same as the second continuous larger visible

9. The set of stacked product arrays according to Claim 1, wherein each individual product further comprises a separate visible graphic, and wherein each separate visible graphic is the same.

10. The set of stacked product arrays according to Claim 1, wherein at least 25% of the visible graphics are different from every other visible graphic.

11. The set of stacked product arrays according to Claim 1, wherein each visible graphic is different from every other visible graphic.

12. A process for enhancing the visibility and recognition of a set of stacked product arrays according to claim 1, comprising the steps of:
A. providing a plurality of individual products, each individual product comprising a visible graphic, wherein at least one edge of each visible graphic matches at least one edge of at least one other visible graphic, and wherein each visible graphic is different; and
B. stacking the individual products together such that the combination of the visible graphics forms at least one continuous larger visible graphic,
wherein the area of the continuous larger visible graphic is larger than the average area of the visible graphics.

## Patentansprüche

1. Set von Stapelproduktgruppierungen mit verbesserter Sichtbarkeit und Erkennung, umfassend eine erste Stapelproduktgruppierung und eine zweite Stapelproduktgruppierung, die unmittelbar darunter gestapelt ist, wobei die Stapelproduktgruppierungen (100) jeweils mehrere einzelne Produkte (110) umfassen, wobei jedes einzelne Produkt eine sichtbare Grafik (112) umfasst, wobei, wenn die einzelnen Produkte zusammen ausgerichtet sind, mindestens ein Rand (113a) jeder sichtbaren Grafik (112a) zu mindestens einem Rand (113b) von mindestens einer anderen sichtbaren Grafik (112b) passt, wobei sich mindestens eine sichtbare Grafik (112a) von mindestens einer anderen sichtbaren Grafik (112b) unterscheidet, wobei die einzelnen Produkte geeignet gestapelt sind, sodass die Kombination der sichtbaren Grafiken mindestens eine kontinuierliche größere sichtbare Grafik (114) bildet, wobei die Fläche der kontinuierlichen größeren sichtbaren Grafik größer ist als die durchschnittliche Fläche der sichtbaren Grafiken, wobei jedes Produkt abnehmbar gestapelt ist, wobei die erste Stapelproduktgruppierung ein erstes Set einzelner Produkte (110) umfasst, die die kontinuierliche größere sichtbare Grafik (114) bilden, wobei die kontinuierliche größere sichtbare Grafik eine erste kontinuierliche größere sichtbare Grafik ist und wobei die zweite Stapelproduktgruppierung ein zweites Set einzelner Produkte (110c) umfasst, die unmittelbar unter dem ersten Set einzelner Produkte gestapelt sind, und wobei mindestens ein einzelnes Produkt in dem zweiten Set einzelner Produkte die gleiche sichtbare Grafik (112c) wie ein entsprechendes einzelnes Produkt aus dem ersten Set einzelner Produkte umfasst, sodass, wenn das entsprechende einzelne Produkt entnommen wird, die sichtbare Grafik von dem einzelnen Produkt aus dem zweiten Set einzelner Produkte einen Teil der ersten kontinuierlichen größeren sichtbaren Grafik zu bilden scheint.

2. Set von Stapelproduktgruppierungen nach Anspruch 1, wobei die Produkte in der Form von Schachteln sind.

3. Set von Stapelproduktgruppierungen nach Anspruch 1, wobei die Stapelproduktgruppierung mindestens drei einzelne Produkte breit ist.

4. Set von Stapelproduktgruppierungen nach Anspruch 1, wobei die Stapelproduktgruppierung mindestens drei einzelne Produkte hoch ist.

5. Set von Stapelproduktgruppierungen nach Anspruch 1, wobei die Fläche der kontinuierlichen größeren sichtbaren Grafik ungefähr 4 Mal bis ungefähr 81 Mal so groß ist wie die durchschnittliche Fläche der sichtbaren Grafiken.

6. Set von Stapelproduktgruppierungen nach Anspruch 1, wobei die kontinuierliche größere sichtbare Grafik eine nicht wiederholte kontinuierliche größere sichtbare Grafik ist.

7. Set von Stapelproduktgruppierungen nach Anspruch 1, das ferner einen Transportbehälter umfasst, wobei die Stapelproduktgruppierung geeignet in dem Transportbehälter gestapelt ist, sodass die kontinuierliche größere Grafik gebildet wird.

8. Set von Stapelproduktgruppierungen nach Anspruch 9, wobei die zweite Stapelproduktgruppierung eine zweite kontinuierliche größere sichtbare Grafik (114) umfasst, und wobei die erste kontinuierliche größere sichtbare Grafik (114) die gleiche ist wie die zweite kontinuierliche größere sichtbare Grafik.

9. Set von Stapelproduktgruppierungen nach Anspruch 1, wobei jedes einzelne Produkt ferner eine separate sichtbare Grafik umfasst, und wobei jede separate sichtbare Grafik die gleiche ist.

10. Set von Stapelproduktgruppierungen nach Anspruch 1, wobei sich mindestens 25 % der sichtbaren Grafiken von jeder anderen sichtbaren Grafik unterscheiden.

11. Set von Stapelproduktgruppierungen nach Anspruch 1, wobei sich jede sichtbare Grafik von jeder anderen sichtbaren Grafik unterscheidet.

12. Verfahren zum Verbessern der Sichtbarkeit und Erkennung eines Sets von Stapelproduktgruppierungen nach Anspruch 1, das die folgenden Schritte umfasst:
A. Bereitstellen mehrerer einzelner Produkte, wobei jedes einzelne Produkt eine sichtbare Grafik umfasst, wobei mindestens ein Rand jeder sichtbaren Grafik zu mindestens einem Rand von mindestens einer anderen sichtbaren Grafik passt und wobei jede sichtbare Grafik unterschiedlich ist; und
B. Zusammenstapeln der einzelnen Produkte, sodass die Kombination der sichtbaren Grafiken mindestens eine kontinuierliche größere sichtbare Grafik bildet,
wobei die Fläche der kontinuierlichen größeren sichtbaren Grafik größer ist als die durchschnittliche Fläche der sichtbaren Grafiken.

## Revendications

1. Ensemble de gammes de produits empilés ayant une visibilité et une reconnaissance améliorées comprenant une première gamme de produits empilés, et une deuxième gamme de produits empilés, empilée immédiatement plus bas, dans lequel les gammes de produits empilés (100) comprennent chacune une pluralité de produits individuels (110), chaque produit individuel comprenant un élément graphique visible (112), dans lequel lorsque les produits individuels sont alignés ensemble au moins un bord (113a) de chaque élément graphique visible (112a) correspond à au moins un bord (113b) d'au moins un autre élément graphique visible (112b), dans lequel au moins un élément graphique visible (112a) est différent d'au moins un autre élément graphique visible (112b), dans lequel les produits individuels sont empilés de façon appropriée de sorte que la combinaison des éléments graphiques visibles forme au moins un élément graphique visible continu plus grand (114) dans lequel l'aire de l'élément graphique visible continu plus grand est plus grande que l'aire moyenne des éléments graphiques visibles, dans lequel chaque produit est empilé de façon amovible, dans lequel la première gamme de produits empilés comprend un premier ensemble de produits individuels (110) qui forment l'élément graphique visible continu plus grand (114), dans lequel l'élément graphique visible continu plus grand est un premier élément graphique visible continu plus grand, et dans lequel la deuxième gamme de produits empilés comprend un deuxième ensemble de produits individuels (110c) empilés immédiatement plus bas que le premier ensemble de produits individuels, et dans lequel au moins un produit individuel dans le deuxième ensemble de produits individuels comprend le même élément graphique visible (112c) en tant que produit individuel correspondant provenant du premier ensemble de produits individuels, de telle sorte que si le produit individuel correspondant est retiré, l'élément graphique visible du produit individuel provenant du deuxième ensemble de produits individuels semble former une partie du premier élément graphique visible continu plus grand.

2. Ensemble de gammes de produits empilés selon la revendication 1, dans lequel les produits sont sous la forme de boîtes.

3. Ensemble de gammes de produits empilés selon la revendication 1, dans lequel la gamme de produits empilés a une largeur d'au moins trois produits individuels.

4. Ensemble de gammes de produits empilés selon la revendication 1, dans lequel la gamme de produits empilés a une hauteur d'au moins trois produits individuels.

5. Ensemble de gammes de produits empilés selon la revendication 1, dans lequel l'aire de l'élément graphique visible continu plus grand est d'environ 4 fois à environ 81 fois plus grande que l'aire moyenne des éléments graphiques visibles.

6. Ensemble de gammes de produits empilés selon la revendication 1, dans lequel l'élément graphique visible continu plus grand est un élément graphique visible continu plus grand non répétitif.

7. Ensemble de gammes de produits empilés selon la revendication 1, comprenant en outre un conteneur d'expédition, dans lequel la gamme de produits empilés est empilée de façon appropriée dans le conteneur d'expédition de telle sorte que l'élément graphique continu plus grand est formé.

8. Ensemble de gammes de produits empilés selon la revendication 9, dans lequel la deuxième gamme de produits empilés comprend un deuxième élément graphique visible continu plus grand (114) et dans lequel le premier élément graphique visible continu plus grand (114) est le même que le deuxième élément graphique visible continu plus grand.

9. Ensemble de gammes de produits empilés selon la revendication 1, dans lequel chaque produit individuel comprend en outre un élément graphique visible indépendant, et dans lequel chaque élément graphique visible indépendant est le même.

10. Ensemble de gammes de produits empilés selon la revendication 1, dans lequel au moins 25 % des éléments graphiques visibles sont différents de chaque autre élément graphique visible.

11. Ensemble de gammes de produits empilés selon la revendication 1, dans lequel chaque élément graphique visible est différent de chaque autre élément graphique visible.

12. Procédé pour améliorer la visibilité et la reconnaissance d'un ensemble de gammes de produits empilés selon la revendication 1, comprenant les étapes consistant à :
A. fournir une pluralité de produits individuels, chaque produit individuel comprenant un élément graphique visible, dans lequel au moins un bord de chaque élément graphique visible correspond à au moins un bord d'au moins un autre élément graphique visible, et dans lequel chaque élément graphique visible est différent ; et
B. empiler les produits individuels ensemble de telle sorte que la combinaison des éléments graphiques visibles forme au moins un élément graphique visible continu plus grand,
dans lequel l'aire de l'élément graphique visible continu plus grand est plus grande que l'aire moyenne des éléments graphiques visibles.
